# EUROPÄISCHE PATENTANMELDUNG

(11) **EP 1 059 200 A2**
(43) Veröffentlichungstag der Anmeldung: **13.12.2000**
(21) Anmeldenummer: 00111740.7
(22) Anmeldetag: 02.06.2000
(51) Int. Cl.: B60Q 1/04

(54) **Scheinwerfer**

(30) Priorität: 09.06.1999 DE 19926346
(71) Anmelder: Hella KG Hueck & Co., 59552 Lippstadt (DE)
(72) Erfinder: Lachmayer, Roland, Dr., 59505 Bad Sassendorf (DE); Kersting, Dirk, 59555 Lippstadt (DE); Mennen, Bernd, 59558 Lippstadt (DE); Hüther, Christian, 59602 Rüthen (DE); Eichhorn, Henning, 59555 Lippstadt (DE)

(57) **Zusammenfassung**

Scheinwerfer, insbesondere für Kraftfahrzeuge, mit einem von vorn in eine Gehäuseaufnahme einsetzbaren Scheinwerfergehäuse, wobei das Scheinwerfergehäuse bei einem definierten Stoß in Längsrichtung nach Überschreiten einer bestimmten Kraft entgegen der Fahrtrichtung in der Gehäuseaufnahme um einen vorgegebenen Energieabsorptionsweg verschiebbar ist.

## Beschreibung

Die Erfindung betrifft einen Scheinwerfer, insbesondere für Kraftfahrzeuge, mit einem in Fahrtrichtung einer von vorne in eine Karosserieöffnung einsetzbaren Scheinwerfergehäuses.

Im Rahmen des Fußgängerschutzes in Verbindung mit Automobilen ist es für Crashsituationen von Bedeutung, bei einem Zusammenstoß biomechanische Grenzwerte entsprechender Körperteile von Menschen einzuhalten. Dies gilt auch für den Bereich von Scheinwerfern, deren Hauptbelastungsrichtung in Fahrtrichtung liegt.

Aus der DE 197 32 301 A1 ist ein Scheinwerfer für ein Kraftfahrzeug bekannt, der ein Scheinwerfergehäuse mit mindestens einer Lichteinrichtung aufweist und der in Fahrrichtung von vorn in eine Gehäuseaufnahme einsetzbar ist. Das Gehäuseaufnahmeteil ist dabei als energieabsorbierendes Deformationsteil zur Aufnahme von im wesentlichen in Fahrzeuglängsrichtung eingeleiteter Stoßenergie ausgebildet. Das Gehäuseaufnahmeteil des bekannten Scheinwerfers ist als hohlzylindrisches Deformationsteil ausgebildet, an dessen Wandung innenseitig in Fahrzeuglängsrichtung einander gegenüberliegend zwei u-förmige Energieaufnahmeelemente angeschweißt sind, die zugleich als Führungen für das Scheinwerfergehäuse dienen, an dem Zapfen für den Eingriff in die Führungen angeordnet sind.

Nachteilig bei dem bekannten Scheinwerfer ist, daß die gesamte Gehäuseaufnahme als energieabsorbierendes Deformationsteil von in Fahrzeuglängsrichtung eingeleiteter Stoßenergie ausgebildet ist. Dies führt dazu, daß entweder biomechanische Grenzwerte nur sehr schwer einzuhalten sind oder daß die Stabilität der Gehäuseaufnahme unzureichend ist.

Aufgabe der vorliegenden Erfindung ist es daher, den bekannten Scheinwerfer so zu verbessern, daß trotz hoher Stabilität des Scheinwerfers bei Zusammenstößen mit Fußgängern vorgegebene biomechanische Grenzwerte der entsprechenden Körperteile des Menschen eingehalten werden können.

Diese Aufgabe wird erfindungsgemäß in Verbindung mit dem Oberbegriff des Anspruches 1 dadurch gelöst, daß das Scheinwerfergehäuse bei auftreten einer von vorne in einem spitzen Winkel zu einer Längsachse des Scheinwerfergehäuses wirksamen Stoßkraft um einen vorgegebenen Energieabsorptionsweg verschiebbar ist.

Dadurch, daß das Scheinwerfergehäuse um einen vorgegebenen Energieabsorptionsweg verschiebbar ist, kann die Gehäuseaufnahme eine übliche ausreichende Stabilität aufweisen. Günstige biomechanische Grenzwerte können dabei über die Ausbildung des vorgegebenen Energieabsorptionsweges erreicht werden.

Nach einer bevorzugten Ausführungsform der Erfindung ist das Scheinwerfergehäuse in einer Aufnahmemulde eines Energieabsorberblockes eingefaßt, wobei die Rückseite und/oder eine oder mehrere Seitenwände des Scheinwerfergehäuses unmittelbar flächig an der Wandung der Aufnahmemulde anliegen. Auf diese Weise kann eine beliebig gerichtete Stoßkraft von vorne aufgefangen und entsprechend absorbiert werden. Dabei kann das Scheinwerfergehäuse in Richtung der Stoßkraft verschoben werden oder der Energieabsorberblock weist Bereiche unterschiedlicher Steifigkeit auf, derart, daß das Scheinwerfergehäuse in eine vorgegebene Richtung innerhalb der Karosserieöffnung geführt wird. Ein weiterer Vorteil der Ausbildung eines das Scheinwerfergehäuse umgreifenden bzw. umfassenden Energieaborberblockes besteht darin, daß dieser für das Scheinwerfergehäuse eine tragende Funktion hat, so daß der Aufwand hinsichtlich der Montage reduziert werden kann. Die Anzahl der Befestigungsteile des Scheinwerfergehäuses kann hierdurch reduziert werden bzw. auf bestimmte Bereiche beschränkt sein.

Gemäß einer bevorzugten Ausführungsform der Erfindung weist das Scheinwerfergehäuse Führungsteile auf die in Führungen der Gehäuseaufnahme in einer Normalstellung verriegelbar sind. Die Führungsteile sind dabei als Zapfen ausgebildet, die eine Sollbruchsstelle aufweisen, so daß sie bei dem definierten Stoß abscheren und das Scheinwerfergehäuse in der Gehäuseaufnahme entriegeln.

Dadurch, daß die Führungsteile als Zapfen ausgebildet sind, die eine Sollbruchstelle aufweisen, läßt sich sicherstellen, daß bei dem definierten Stoß der Energieabsorptionsweg freigegeben wird.

Nach einer weiteren bevorzugten Ausführungsform der Erfindung ist das Scheinwerfergehäuse mit seiner der Abdeckscheibe abgewandten Rückseite nach Freigabe des Energieabsorptionsweges gegen einen Energieabsorber verschiebbar.

Dadurch, daß das Scheinwerfergehäuse mit seiner Rückseite gegen einen Energieabsorber verschiebbar bzw. anschlagbar ist, ist eine genaue vorgebbare Energieabsorption möglich.

Nach einer weiteren bevorzugten Ausführungsform der Erfindung ist das Scheinwerfergehäuse mit mindestens einer Seitenwand über einen Energieabsorber gegenüber einem starr mit einem Karosserieteil verbundenen Halteteil, vorzugsweise gegenüber der Gehäuseaufnahme, abgestützt, so dass bei einem Stoß von vorne ein definierter Energieabsorptionsweg in Querrichtung ausgebildet werden kann.

Gemäß einer weiteren bevorzugten Ausführungsform der Erfindung ist der Energieabsorber als ein aus einem komprimierbaren Schaum bestehender Schaumabsorber ausgebildet.

Durch das Verschieben des Scheinwerfergehäuses in der Scheinwerferaufnahme wird der Schaumabsorber aktiviert und zehrt den größten Teil der übertragenen Energie auf. Neben komprimierbarem Schaum sind aber auch andere Energieabsorptionssysteme möglich.

Nach einer weiteren bevorzugten Ausführungsform der Erfindung weist das Scheinwerfergehäuse gegenüber der Gehäuseaufnahme eine elastische Abdichtung auf.

Die elastische Abdichtung dichtet zum einen das hinten offene Scheinwerfergehäuse gegenüber der Scheinwerferaufnahme ab und zum anderen wirkt ein gewisser Anteil der elastischen Abdichtung als Energiespeicher.

Der größere Anteil der Energieumwandlung wird jedoch als plastische Verformung des Energieabsorbers aufgefangen.

Nach einer weiteren bevorzugten Ausführungsform der Erfindung weist das Scheinwerfergehäuse an seiner Rückseite ein erstes Kontaktelement auf, das mit einem zweiten an der Gehäuseaufnahme gelagerten Kontaktelement leitend verbindbar ist. Das zweite Kontaktelement löst sich bei dem definierten Stoß aus seiner Lagerung und läßt sich mit dem Scheinwerfergehäuse um den Energieabsorptionsweg verschieben.

Dadurch, daß sich das zweite Kontaktelement bei dem definierten Stoß ebenfalls aus seiner Lagerung lösen läßt und mit dem Scheinwerfergehäuse um den Energieabsorptionsweg verschoben wird, wird eine Zerstörung des Kontaktelementes vermieden.

Nach einer weiteren bevorzugten Ausführungsform der Erfindung ist das zweite Kontaktelement in einer an der Gehäuseaufnahme angeordneten Clipslagerung gelagert. Die Clipslagerung ermöglicht zum einen eine einfache Montage des zweiten Kontaktelementes und zum anderen ein zerstörungsfreies Loslösen des Kontaktelementes in seiner Lagerung.

Gemäß einer weiteren bevorzugten Ausführungsform der Erfindung sind die Zapfen und der Energieabsorber austauschbar ausgebildet.

Durch die Austauschbarkeit der Zapfen und des Energieabsorbers, läßt sich nach einem erfolgten Crash der Scheinwerfer problemlos reparieren.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

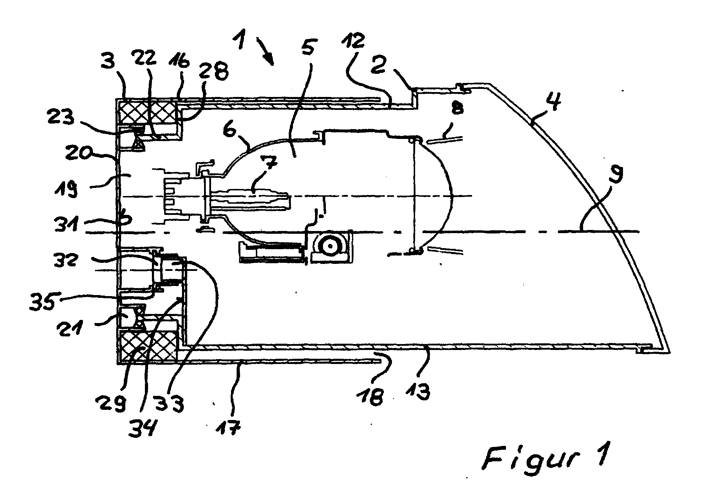

- Figur 1:: Eine Seitenansicht eines Scheinwerfers für Kraftfahrzeuge im Schnitt,

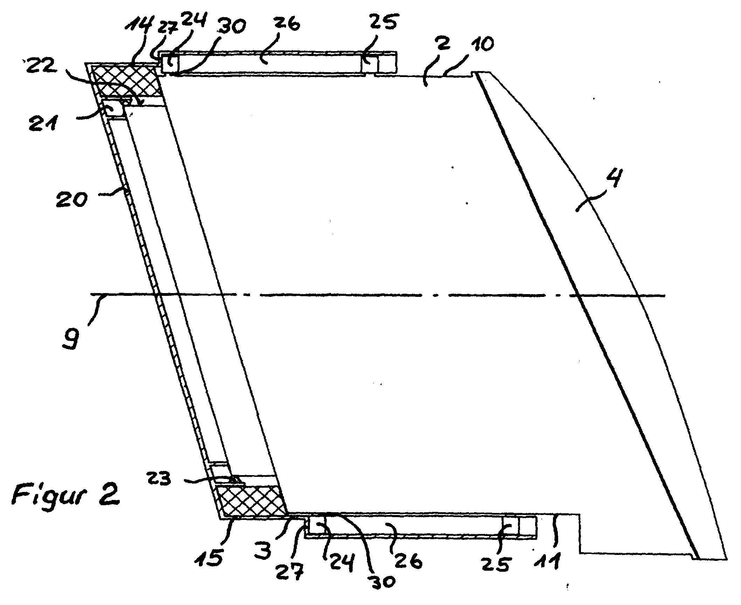

- Figur 2:: eine Draufsicht auf den Scheinwerfer von Figur 1 im Schnitt,
- Figur 3:: eine Seitenansicht eines Scheinwerfers für Kraftfahrzeuge im Schnitt nach einer alternativen Ausführungsform und
- Figur 4:: eine perspektivische Rückansicht eines Energieabsorberblockes und eines in einer Aufnahmemulde desselben eingefaßten Scheinwerfergehäuses.

Ein Scheinwerfer 1 besteht in, wesentlichen aus einem Scheinwerfergehäuse 2, einer Gehäuseaufnahme 3 und einer Abdeckscheibe 4.

In dem Gehäuse 2 ist beispielsweise eine Lichteinheit 5 angeordnet. Die Lichteinheit 5 weist einen Reflektor 6 auf, in dem von der Rückseite her eine Lampe 7 eingebracht ist. Abstrahlseitig ist zwischen dem Reflektor 6 und der Abdeckscheibe 4 eine Sichtblende 8 angeordnet. Quer zu seiner Längsachse 9 weist das Scheinwerfergehäuse 2 zwei in einem Abstand zueinander angeordnete, etwa parallel zueinander verlaufende Seitenwände 10, 11 auf. Die Seitenwände 10, 11 werden in vertikaler Richtung nach oben von einer oberen Seitenwand 12 und nach unten von einer unteren Seitenwand 13 begrenzt. In Abstrahlrichtung wird das Scheinwerfergehäuse 2 von der Abdeckscheibe 4 abgedeckt bzw. verschlossen.

Die Gehäuseaufnahme 3 ist an einem nicht dargestellten, den Scheinwerfer 1 aufnehmenden Karosserieteil fest anordenbar und dient zum einen als rückwärtiger Abschluß des Scheinwerfergehäuses 2 und zum anderen als Gehäusehalterung. Zu diesem Zweck weist die Gehäuseaufnahme 3 eine erste Aufnahmewand 14 und eine zweite Aufnahmewand 15 auf, die benachbart zu den Seitenwänden 10, 11 des Scheinwerfergehäuses 2 angeordnet sind. Die Aufnahmewände 14, 15 werden nach oben von einer oberen Aufnahmewand 16 und nach unten von einer unteren Aufnahmewand 17 begrenzt. Die obere Aufnahmewand 16 ist der oberen Seitenwand 12 und die untere Aufnahmewand 17 der unteren Seitenwand 13 benachbart. In Abstrahlrichtung nach vorn weist die Gehäuseaufnahme 3 eine von dem Aufnahmewänden 14, 15, 16, 17 begrenzte Aufnahmeöffnung 18 auf. Auf der der Aufnahmeöffnung 18 abgewandten Rückseite 19 ist die Gehäuseaufnahme 3 von einer Rückwand 20 verschlossen.

Die Rückwand 20 weist zum Scheinwerfergehäuse 2 hin eine umlaufende Nut 21 auf, in die das Scheinwerfergehäuse 2 mit einem umlaufenden Rand 22 mit einer elastischen Abdichtung 23 dichtend einsetzbar ist.

In horizontaler Richtung sind quer zur Längsachse 9 des Scheinwerfergehäuses 2 zur Rückwand 20 hin an den Seitenwänden 10, 11 zwei einander gegenüberliegende hintere Führungszapfen 24 und zur Abdeckscheibe 4 hin zwei einander gegenüberliegende vordere Führungszapfen 25 angeordnet.

Die den Seitenwänden 10, 11 benachbarten Aufnahmewände 14, 15 weisen mit den Führungszapfen 24, 25 korrespondierende Führungen 26 auf.

Das Scheinwerfergehäuse ist über die Führungszapfen 24, 25 mit der Gehäuseaufnahme 3 verrastbar. In einer Normal- bzw. Raststellung schlagen die hinteren Führungszapfen 24 gegen die der Rückwand 20 benachbarten Führungsbegrenzungen 27 an. Das Scheinwerfergehäuse 2 weist zur Rückwand 20 hin einen rückseitigen Wandungsstreifen 28 auf an dem der umlaufende Rand 22 angeordnet ist.

Zwischen rückseitigem Wandungsstreifen 28 und der Rückwand 20 ist ein Energieabsorber 29 angeordnet. In seiner Normal- bzw. Raststellung schlägt das Scheinwerfergehäuse 2 mit seinem rückseitigen Wandungsstreifen 28 gegen den Energieabsorber 29 an. Der Energieabsorber 29 ist als ein aus einem komprimierbaren Schaum bestehender Schaumabsorber 29 ausgebildet.

Die hinteren Führungszapfen 24 weisen eine Sollbruchstelle 30 auf, an der sie unter einer definierten Belastung bzw. einem definierten Stoß in Richtung der Längsachse 9 nach Überschreiten einer bestimmten Kraft abscheren.

Die Gehäuseaufnahme 3 weist an ihrer dem Scheinwerfergehäuse 2 zugewandten Innenseite 31 der Rückwand 20 ein erstes elektrisches Kontaktelement 32 auf.

Ein dem ersten Kontaktelement 32 benachbartes zweites Kontaktelement 33 ist an dem Scheinwerfergehäuse 2 bzw. der Gehäuserückseite 34 so angeordnet, daß die Kontaktelemente 32, 33 nach Einschieben des Scheinwerfergehäuses 2 in die Gehäuseaufnahme 3 elektrisch leitend miteinander verbunden sind. Das zweite Kontaktelement 33 ist an der Gehäuseaufnahme 3 bzw. an der Rückwand 20 in einer Clipslagerung 35 gelagert.

Zur Montage wird das Scheinwerfergehäuse 2 in Fahrtrichtung von vorn in die Gehäuseaufnahme 3 eingesetzt, so daß ihre Führungszapfen 24, 25 in den Führungen 26 geführt werden, so daß das Scheinwerfergehäuse 2 in einer Normalstellung in der Gehäuseaufnahme 3 verrastet. In der Normalstellung werden die Führungszapfen 24, 25 in einer Verriegelungsposition in einer definierten Stellung gehalten. In einem Crashfall bei einem definierten Stoß in Längsrichtung nach Überschreiten einer bestimmten Kraft wird das Scheinwerfergehäuse 2 um einen vorgegebenen Energieabsorptionsweg in Richtung der Längsachse 9 zur Rückwand 20 hin verschoben. Hierzu scheren mindesten die hinteren Führungszapfen 24 an ihren Sollbruchstellen 30 ab, so daß das Scheinwerfergehäuse 2 entriegelt wird und mit seinem rückseitigen Wandungsstreifen 28 den Energieabsorber 29 aktiviert bzw. durch dessen plastische Verformung eine Energieumwandlung stattfindet.

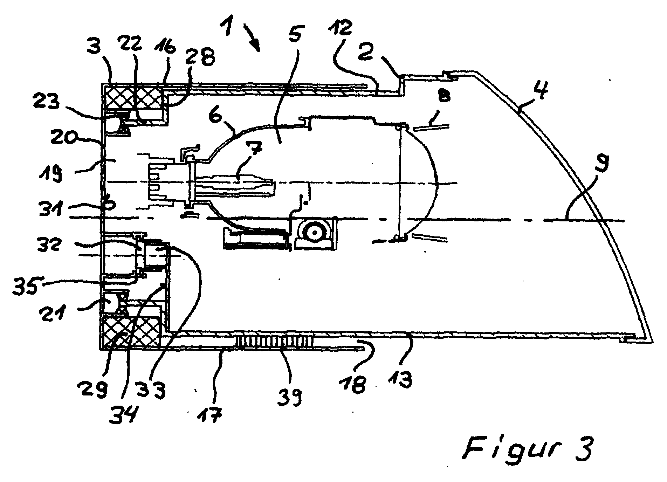

Nach einer alternativen Ausführungsform der Erfindung gemäß Figur 3 kann im Unterschied zu dem bereits beschriebenen Ausführungsbeispiel zusätzlich ein unterer Energieabsorber 39 vorgesehen sein, der sich in einem unteren Bereich des Scheinwerfers 1 zwischen der unteren Seitenwand 13 des Scheinwerfergehäuses 2 und der unteren Aufnahmewand 17 der Gehäuseaufnahme 3 erstreckt. Bei einem Stoß von vorne ergibt sich somit nicht nur eine Stoßenergieaufnahme in Richtung der Längsachse 9, sondern auch quer zu derselben. Der untere Energieabsorber 39 besteht aus dem gleichen Material wie der hintere Energieabsorber 29. Beide können aus einem energieabsorbierendem Schaumstoff oder einem energieabsorbierendem Kunststoffgewebe bestehen.

Alternativ können weitere Energieabsorber anderen seitlichen Wänden 10, 11, 12 des Scheinwerfergehäuses 2 zugeordnet sein, so dass sich auf diese Weise eine die Wände 10, 11, 12, 13 des Scheinwerfergehäuses 2 im wesentlichen umschließende Hinterfütterung ergibt. Die Energieabsorber bilden eine Umhüllung des Scheinwerfergehäuses 2 in einem seitlichen und rückwärtigen Bereich und können einstückig ausgebildet sein.

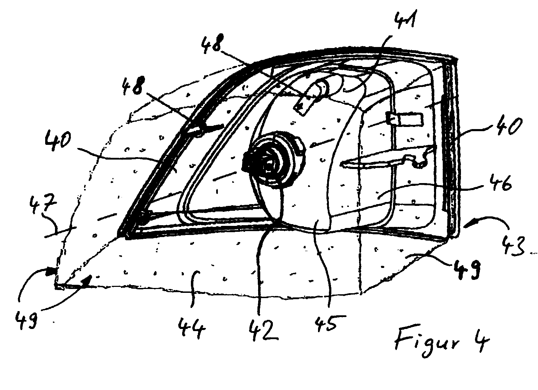

Nach einer weiteren Ausführungsform der Erfindung gemäß Figur 4 ist ein Scheinwerfergehäuse 40 mit einem Reflektor 41 in dessen rückseitiger Öffnung eine Lampenfassung 42 befestigt ist, in einer Aufnahmemulde 43 eines als Energieabsorberblocks ausgebildeten Energieabsorbers 44 eingefaßt. Die Kontur der Aufnahmemulde 43 korrespondiert zur rückwärtigen Kontur des Scheinwerfergehäuses 40 bzw. des Reflektors 41. Der Reflektor 41 kann als Teil der Rückseite bzw. der Seitenwand des Scheinwerfergehäuses 40 angesehen werden, so daß eine Rückseite 45 und sich von dieser nach vorne anschließenden Seitenwände 46 flächig und unmittelbar in der Aufnahmemulde 43 anliegen.

Der Energieabsorberblock 44 weist eine solche Dicke auf, daß das Scheinwerfergehäuse 40 bei einer Stoßbeanspruchung von vorne in einem spitzen Winkel zu einer Längsachse nicht nur entgegen der Fahrtrichtung, sonder auch in einem spitzen Winkel zu einer Längsachse 47 des Scheinwerfergehäuses 40 verschiebbar ist. Der Energieabsorbtionsweg kann mit der Längsachse 47 eine Ebene aufspannen, die in einem spitzen Winkel, vorzugsweise bis 45 Grad, zu einer Vertikal- und/oder Horizontalebene steht. Dabei wird das Scheinwerfergehäuse 40 in Richtung der Stoßkraft verschoben.

Alternativ kann der Energieabsorberblock 44 mehrere Bereich unterschiedlicher Steifigkeit aufweisen, so daß das Scheinwerfergehäuse 40 entlang eines vorgegebenen Energieabsorbtionsweges geführt wird. Beispielsweise kann ein unterer Bereich, der unterhalb des Reflektors 41 angeordnet ist, einen nach hinten schmaler werdenden steifen Bereich aufweisen, so daß bei einer Stoßbeanspruchung des Scheinwerfergehäuses 40 von oben die Kraftrichtung nach hinten umgelenkt wird. Der hintere Bereich des Energieabsorberblockes 44 kann aus einem weniger steifen Material bestehen.

Zur Befestigung des Scheinwerfergehäuses 40 sind mehrere Befestigungsteile 48 vorgesehen, die an korrespondierenden nicht dargestellten feststehenden Fahrzeugteilen (Karosserieteil) lösbar befestigt sind. Vorzugsweise weisen die Befestigungsteile und/oder die Fahrzeugteile Sollbruchstellen auf, so daß bei einer Stoßbeanspruchung das Scheinwerfergehäuse 40 in der vorgegebenen Richtung oder in Richtung der Stoßkraft verschoben werden kann. Das Befestigungsteil 48 ist vorzugsweise als abreißbare Kunststofflasche ausgebildet.

Der Energieabsorberblock 44 ist an rückwärtigen Wandungen 49 flächig an einem nicht dargestellten Karosserietragrahmen abgestützt. Der flächenhaften Kraftaufnahme durch den Energieabsorberblock 44 steht somit eine flächenhafte Gegenkraft durch den Karosserietragrahmen entgegen.

Der Energieabsorberblock 44 kann aus einem vermaschten oder geschäumten Kunststoff bestehen. Verwendbar sind beispielsweise PUR (Polyurethan)- oder PE (Polyehtylen)-Schäume mit einer Härte von 10 bis 200 kJ/m³.

## Patentansprüche

1. Scheinwerfer, insbesondere für Kraftfahrzeuge, mit einem in Fahrtrichtung einer von vorne in eine Karosserieöffnung einsetzbaren Scheinwerfergehäuses, dadurch gekennzeichnet, daß das Scheinwerfergehäuse (2, 40) bei auftreten einer von vorne in einem spitzen Winkel zu einer Längsachse (9) des Scheinwerfergehäuses (2, 40) wirksamen Stoßkraft um einen vorgegebenen Energieabsorptionsweg verschiebbar ist.

2. Scheinwerfer nach Anspruch 1, dadurch gekennzeichnet, daß das Scheinwerfergehäuse (2, 40) mit einer Abdeckscheibe (4) abgewandten Rückseite (34, 45) und/oder einer Seitenwand (46) nach Freigabe des Energieabsorptionsweges gegen einen Energieabsorber (29) verschiebbar ist.

3. Scheinwerfer nach Anspruch 1 oder 2, dadurch gekennzeichnet, daß der Energieabsorber als ein die Rückseite (34, 45) und/oder die Seitenwand (46) des Scheinwerfergehäuses umfassender Energieabsorberblock (44) ausgebildet ist mit einer Aufnahmemulde (43), deren Kontur zu der rückwärtigen Kontur des Scheinwerfergehäuses (40) korrespondiert und in der das Scheinwerfergehäuse (40) eingefaßt ist.

4. Scheinwerfer nach einem der Ansprüche 1 bis 3, dadurch gekennzeichnet, daß das Scheinwerfergehäuse (40) in einem rückwärtigen Konturbereich mindestens ein Befestigungsteil (48) aufweist, das mit einem feststehenden Fahrzeugteil lösbar verbunden ist.

5. Scheinwerfer nach einem der Ansprüche 1 bis 4, dadurch gekennzeichnet, daß der Energieabsorberblock (44) mehrere Bereiche unterschiedlicher Steifigkeit aufweist, derart, daß das Scheinwerfergehäuse (40) entlang eines vorgegebenen Energieabsorptionsweges geführt ist.

6. Scheinwerfer nach Anspruch 4 oder 5, dadurch gekennzeichnet, daß das Befestigungsteil (48) und/oder das Fahrzeugteil eine Sollbruchstelle aufweist, derart, daß bei Auftreten der Stoßkraft von vorne das Scheinwerfergehäuse (40) in Richtung der Stoßkraft oder in eine vorgegebene Führungsrichtung verschiebbar ist.

7. Scheinwerfer nach einem der Ansprüche 1 bis 6, dadurch gekennzeichnet, daß der Energieabsorberblock (44) flächig gegen einen Karosserietragrahmen abgestützt ist.

8. Scheinwerfer nach einem der Ansprüche 1 bis 7, dadurch gekennzeichnet, daß das Befestigungsteil (48) als eine Kunststofflasche ausgebildet ist.

9. Scheinwerfer nach Anspruch 1 oder 2, dadurch gekennzeichnet, daß das Scheinwerfergehäuse (2) Führungsteile, die in Führungen (26) der Gehäuseaufnahme (2) in einer Normalstellung verriegelbar sind.

10. Scheinwerfer nach Anspruch 9, dadurch gekennzeichnet, daß die Führungsteile als Führungszapfen (24, 25) ausgebildet sind, die eine Sollbruchstelle (30) aufweisen, so daß sie bei dem definierten Stoßabscheren das Scheinwerfergehäuse (2) in der Gehäuseaufnahme (3) entriegeln.

11. Scheinwerfer nach Anspruch 9 oder 10, dadurch gekennzeichnet, daß quer zur Längsachse (9) des Scheinwerfergehäuses (2) zwischen einer Seitenwand (12, 13) des Scheinwerfergehäuses (2) und einer Aufnahmewand (17) der Gehäuseaufnahme (3) ein weiterer Energieabsorber (39) angeordnet ist.

12. Scheinwerfer nach einem der Ansprüche 9 bis 11, dadurch gekennzeichnet daß das Scheinwerfergehäuse (2) gegenüber der Gehäuseaufnahme (3) eine elastische Abdichtung (23) aufweist.

13. Scheinwerfer nach einem der Ansprüche 9 bis 12, dadurch gekennzeichnet, daß das Scheinwerfergehäuse (2) an seiner Rückseite (34) ein erstes Kontaktelement (32) aufweist, das mit einem zweiten an der Gehäuseaufnahme (3) gelagerten Kontaktelement (33) leitend verbunden ist.

14. Scheinwerfer nach Anspruch 13, dadurch gekennzeichnet, daß das zweite Kontaktelement (33) sich bei dem definierten Stoß aus seine Lagerung (35) lösen und mit dem Scheinwerfergehäuse (2) um den Energieabsorptionsweg verschieben läßt.

15. Scheinwerfer nach Anspruch 13 oder 14, dadurch gekennzeichnet, daß das zweite Kontaktelement (33) in einer an der Gehäuseaufnahme (3) angeordneten Clipslagerung (35) gelagert ist.

16. Scheinwerfer nach einem der Ansprüche 9 bis 15, dadurch gekennzeichnet, daß die Zapfen (24, 25) und der Energieabsorber (29, 44) austauschbar ausgebildet sind.

17. Scheinwerfer nach einem der Ansprüche 1 bis 16, dadurch gekennzeichnet, daß der Energieabsorber (29, 44) als ein aus einem komprimierbaren Schaum bestehender Schaumabsorber oder als ein vermaschter Kunststoff ausgebildet ist.

18. Scheinwerfer nach Anspruch 17, dadurch gekennzeichnet, daß der Energieabsorber (29, 44) aus einem PUR-Schaummaterial oder einem PE-Schaummaterial besteht.
